# EUROPEAN PATENT APPLICATION

(11) **EP 3 582 170 A1**
(43) Date of publication of application: **18.12.2019**
(21) Application number: 19190143.8
(22) Date of filing: 30.05.2014
(51) Int. Cl.: G06Q 40/00

(54) **SPORTS-BASED FINANCIAL INSTRUMENT DEVELOPMENT AND TRADING SYSTEMS AND METHODS**

(30) Priority: 08.02.2014 US 201461937534 P
(62) Divisional of application: 14881999.8
(71) Applicant: Crystal World Holdings, Inc., Washington, DC 20006 (US)
(72) Inventor: Rabalais, Christopher, Humble, Texas 77346 (US); Ozgit, Alper, Northbrook, Illinois 60662 (US); Brown, Neil, Saint Paul, MN 55107 (US); Sethness, Ralph, Boca Raton, FL 33428 (US); Bleier, Paul, Toronto, Ontario M6C 3L6 (CA); Tannis, Ernest, Alpharetta, GA 30022 (US); Henry, Jason, Lindsay, Ontario K9V 4R1 (CA); Underhill, Ace, Pasadena, CA 91104 (US)
(74) Representative: Veni Swiss & European Patent Attorneys

(57) **Abstract**

A system includes a banking network (1) and a rewards server (2). An integrated wallet with mobile access (3) is connected to the banking network (1) and is configured to facilitate payment flows. A tracking device (4) is connected to the rewards server (2) and is configured to track and measure levels of financial knowledge and understanding of financial concepts of system users. The rewards server (2) is configured to store trading data as well as said measures of financial knowledge and by virtue of communicating to an interface, through which traders can accumulate reward points based on trading activity or level of financial knowledge. The foregoing components may be connected to an exchange system (5). Exchange system (5) may also be connected to a user trading terminals (6), which may include personal computers, mobile devices, TVs, and the like, through which traders can access the exchange system, and data servers in the public domain (7).

## Description

### BACKGROUND

### 1. Field of the Disclosure

The disclosure relates to systems and methods for sports-based financial instrument development and trading. In particular, the disclosure relates systems and methods for sports-based financial instrument and development trading using an interconnected data storage and processing infrastructure configured to operate to provide a socially beneficial mix of sports and finance.

### 2. Introduction

People have been wagering money on the outcomes of sports events for thousands of years. The Romans, for example, bet on chariot races. Over centuries, sports betting has taken different forms, has been subject to various regulations and restrictions, and the sports events that attracted betting activity have themselves changed.

Although sports betting is illegal in many jurisdictions, it is more prevalent than ever. Indeed, it is estimated that the size of the combined legal and illegal sports betting markets in the United States of America, for example, was approximately $380 billion at the turn of the century.

While sports betting continues to be a popular entertainment vehicle, it has two significant shortcomings. First, it does not create public utility. More specifically, it creates neither price information, nor risk management opportunities, both of which are essential requirements for financial products to be traded on regulated markets. Regarding the former, the sports industry is in desperate need of prices that provide a future outlook for performance, popularity, and valuation. Sports betting produces line information, in the form of odds. Line information may make good conversation, but is otherwise substantially useless: it is short lived and simply evaporates after the sports event has ended. Similarly, sports betting does not provide opportunities to lay off sports related risks, other than, perhaps, to the sports book that may have received too many bets on the same side. The sports book is not even part of the sports industry; rather, it is an artificial product of sports betting itself. In the meantime, despite the fact that real sports-related risks such as performance and popularity risks are disclosed in regulatory filings as major risk factors, they are not managed or mitigated and continue to be put aside.

Sports betting suffers from yet another shortcoming. By design, it creates serious incentive problems wherein anyone who may influence the outcome of the game, the referee, the player or the like, may be incentivized to fix games, shave points, or in general not exert full effort. This perverse incentive is a direct result of the triangular symbiosis of sports betting, the bettor and the influencer. The sports bettor simply promises a sizeable cash payment to the influencer, and the influencer behaves in a certain, mostly unethical way to collect. The sports book generally doesn't even notice, and the leagues and fans are left with a significant threat to the purity and integrity of sports. The White Sox Scandal of 1919 is, after almost a century, still very well known, and there have been some recent cases including a professional basketball referee betting on games in which he officiated.

Thus, a combination of sports and finance embodied in a financial instrument that has socially beneficial uses has eluded mankind for hundreds of years. As a result, the sports industry, among the ten largest U.S. industries, has been deprived of access to financial tools that are available to practically every other industry. In addition, the potentially huge financial rewards that would accrue to the developer of a socially useful, legitimate sports trading mechanism remain unclaimed.

Various sports markets have recently been proposed, such as a real-time play valuation method for individual athletes in the form of a "fantasy" game branded as PROTRADE, and fantasy game variation branded as STAR STREET SPORTS. While these are not necessarily sports betting applications, they do appear in some instances to be workarounds to illegal sports betting applications. In any event, they are alternative entertainment vehicles that do not deliver public utility to become regulated market instruments.

Despite the long felt and substantial need in the market for sports betting that delivers public utility, the problem has remained unresolved. It appears that the dominance of traditional sports betting and its notoriety due to scandals have contributed to bias in the minds of the public, and a perception that sports and finance don't mix.

The prevalence of this deeply-rooted belief is not confined to a certain category of persons. Rather, it is shared by leading academics and practitioners of financial markets and visible in their public comments to the regulators, their teachings and their writings. Potential investors also share this view, wherein it is presumed that a proper mix of sports and finance just can't be achieved.

There are three seemingly unrelated policy issues that keep policymakers busy today: first, financial illiteracy and the effort to provide an education to the public so they can make sound financial decisions; second, the sustained unemployment and the pursuit of creating jobs; and third, sustained, and perhaps increasing inequality in access to opportunity. These three public policy problems are well-known.

### SUMMARY

While the aforementioned policy problems are well-known, it has now been found and recognized that a proper mix of sports and finance, in addition to public utility and preservation of integrity, would deliver desirable solutions to each of the three identified problems, and problems confronted by related art systems.

For example, a related art experimental market was found to have some key deficiencies both from a system architecture and product design standpoint. First, it fell prey to automated trading by bots and other programs that made money at the expense of human traders, applied pressure on liquidity, and manipulated prices, problems that would be even more pronounced today due to the sophistication of automated trading technologies. Second, it was found to have a shorting mechanism that was malfunctioning, creating a demand/supply imbalance, and did not have requirement that shorts pay a dividend, leading to arbitrage. Third, it had a flawed internal market making system in place, where market making created liabilities in the form of dividends that are not backed by cash assets, creating an incurable imbalance between assets and liabilities. Fourth, the IPO process was flawed: the pricing and flotation amounts were based substantially on guesswork, leading to unstable markets.

As such, systems and methods are provided wherein automated trading is disallowed through the use of speed limits and trader recognition capabilities, which is critical to curbing manipulation and achieving stability. Systems and methods are provided wherein a stability of the market may be enhanced by the use of serialized contracts so a specific contract can be easily tracked for its life. Shorting is made possible, with shorts paying dividends to the long side. Internal market makers may be dismissed or may be implemented wherein commissions are collected to keep the asset/liability balance in check. Finally, initial pricing and floating decisions may be based on market demand, market prices, pricing history, public domain data and the like collected by the exchange, and may be subsequently dissected and analyzed. Advantages of the provided systems and methods may include:
a) providing price information to the sports industry;
b) providing risk management opportunities to the sports industry;
c) preserving integrity of sports;
d) increasing financial literacy by inducing people to learn financial concepts through sports, a familiar penetration point;
e) opening a new field and creating new jobs; and
f) equalizing access to opportunity by empowering people with financial knowledge.

Exemplary embodiments are described herein. It is envisioned, however, that any system that incorporates features of methods and systems described herein are encompassed by the scope and spirit of the exemplary embodiments.

### BRIEF DESCRIPTION OF THE DRAWINGS

In order to describe the manner in which the above-recited and other advantages and features of the disclosure can be obtained, a more particular description of the disclosure briefly described above will be rendered by reference to specific embodiments thereof which are illustrated in the appended drawings. Understanding that these drawings depict only typical embodiments of the disclosure and are not therefore to be considered to be limiting of its scope, the disclosure will be described and explained with additional specificity and detail through the use of the accompanying drawings in which:
FIG. 1 is a diagrammatical view of a system configured to develop an infrastructure useful for developing and trading sports-based financial instruments in accordance with an exemplary embodiment;
FIG. 2 is a diagrammatical view of a system configured to offer sports-based financial instruments to prospective traders and serialization of contracts in accordance with an exemplary embodiment;
FIG. 3 is a diagrammatical view of a system configured to enable trading sports-based financial instruments on an exchange system or platform in accordance an exemplary embodiment;
FIG. 4 shows methods for funding contract reserve pools in accordance with an exemplary embodiment;
FIG. 5 shows methods for redistributing contract reserve pools based on sports event outcomes in accordance with an exemplary embodiment;
FIG. 6 shows methods for distributing a portion of contract reserve pools to the contract holders in accordance with an exemplary embodiment.

### DETAILED DESCRIPTION

Additional features and advantages of the disclosure will be set forth in the description which follows, and in part will be obvious from the description, or may be learned by practice of the disclosure. The features and advantages of the disclosure may be realized and obtained by means of the instruments and combinations particularly pointed out in the appended claims. These and other features of the present disclosure will become more fully apparent from the following description and appended claims, or may be learned by the practice of the disclosure as set forth herein.

Various embodiments of the disclosure are discussed in detail below. While specific implementations are discussed, it should be understood that this is done for illustration purposes only. A person skilled in the relevant art will recognize that other components and configurations may be used without parting from the spirit and scope of the disclosure.

The disclosure comprises a variety of embodiments, such as methods and systems and other embodiments that relate to the basic concepts of the disclosure.

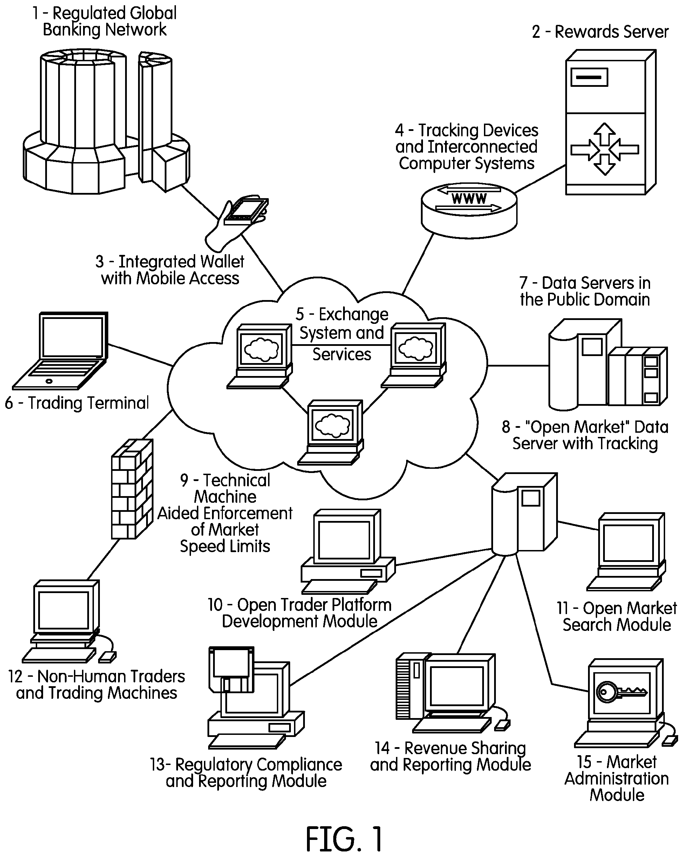

FIG. 1 shows a diagrammatical view of a system configured to develop an infrastructure useful for developing and trading sports-based financial instruments in accordance with an exemplary embodiment. In particular, FIG. 1 shows a system configured to develop an infrastructure for developing and trading sports-based financial instruments. The system preferably includes an exchange system 5 that provides a trading platform and may also store trading information. In some embodiments, one or more components of the exchange system 5 may be located or stored in a "cloud" infrastructure or remotely accessible wired and/or wireless network.

As shown in FIG. 1, systems may include a banking network 1 and a rewards server 2. An integrated electronic wallet with mobile access 3 may be connected to the banking network 1 and may be configured to facilitate payment flows. A tracking device 4 may be connected to the rewards server 2 and may be configured to track and measure a level of financial knowledge and an understanding of financial concepts. The rewards server 2 may be configured to store trading data as well as said measures of financial knowledge and by virtue of communicating to an interface, through which traders can accumulate reward points based on trading activity or level of financial knowledge. The foregoing components may be connected to an exchange system or platform 5. The exchange system 5 may include one or more processors, data storage devices or systems for electronic storage and processing of data. The exchange system 5 may comprise a single system or multiple systems, and may be distributed across multiple systems and system components such as servers, databases, processors, controllers, modules and the like. In some embodiments, the exchange system 5 may be "cloud"-based.

The exchange system 5 may be connected to one or more user trading terminals 6, which may include personal computers, mobile devices, TVs, and the like, through which traders can access the exchange system. The exchange system 5 may be configured to transmit data for display, storage, and/or processing on the one or more user trading terminals 6. The exchange system 5 may also be connected and configured to communicate with, for example, data servers in the public domain 7.

The exchange system 5 may include and/or may be configured to operate with a limit processor or limit module 9. The limit processor or module 9 may be configured to enforce market speed limits by flagging or rejecting trades that are executed by non-human traders or trading machines 12 using the exchange system 5.

An open market data server 8 may be configured to store parts or all of the trading data including pool data. In an embodiment, the system may also include various modules to which the exchange system or platform 5 may be connected, such as an open market search module 11 that handles all market public reporting and searching processes, a market administration module 15 that handles all processes related to market administration, a revenue sharing and reporting module 14 that handles all processes related to revenue sharing with sports leagues, organizations, similar governing bodies or athletes, reporting and disbursement, a regulatory compliance and reporting module 13 that handles all processes related to regulatory compliance and reporting; and an open trader platform development module 10 that handles all processes related to sports trader environment customization, including processes to conceive and develop trading tools as well as other sports-based financial instruments.

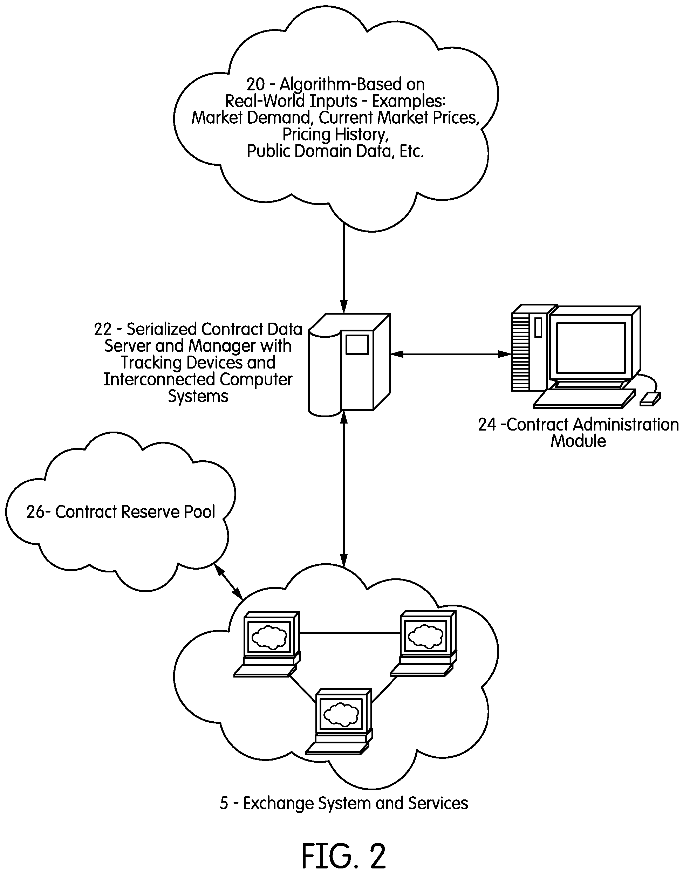

FIG. 2 shows a diagrammatical view of a system configured to offer sports-based financial instruments to prospective traders and serialization of contracts in accordance with an exemplary embodiment. In particular, FIG. 2 shows a system configured for making a plurality of sports contracts corresponding to a sports league, organization or similar governing body available to a plurality of the traders for the first time. The exchange system 5 may include or may be connected to an initial price/float module 20. The initial prices as well as the float or the quantity of contracts may be determined by an initial price/float module 20, wherein the module 20 may be configured to rely on estimates of market demand, current market prices, the pricing history and the like. As shown in FIG. 2, the exchange system 5 may be connected to or include a serialized contract data server and manager 22. The serialize contract data server 22 may include or may be connected to the initial price/float module 20.

The contract server and manager 22 may be configured to include tracking devices, and may be composed of interconnected computer systems, for example. The exchange system 5 may be configured to include or may be connected to a contract administration module 24, and may include or be connected to a contract reserve pool module 26. Alternatively, or additionally, the contract reserve pool module 26 may be included in or connected to the open market data server 8. The contract reserve pool module may comprise a processor and/or memory or storage components for storing, processing, and/or serving contract reserve pool data.

Once the prices and quantities are determined by the price/float module 20, the contracts, which may represent a team, an athlete or the like, may be made available to the traders at a predetermined time, where a computer code instructs the symbol of the contract, which may be a letter sequence, a symbol, the logo of the team, or the like, the number of contracts, and the prices at which they are available for sale to get stored in memory or a database on the exchange system 5. In some embodiments, the contracts may be made available in a staggered fashion. For example, the first ten contracts may be made available for sale at a certain price, and the next ten may be made available for sale at a different price. The traders to whom the contracts will be sold may be determined on a first-come first-serve basis, or in the order where the trade order is routed to the exchange system 5 that stores and processes the trade orders.

In an embodiment, traders can commit to a certain number of contracts in advance by announcing their intention that they will buy a certain number of contracts at a certain price, where such commitment may be without recourse. In some embodiments, the number of contracts a trader can buy may be limited. Such limitations may be based on predetermined percentages, where a single trader can only own a certain percentage of the total float at any given point in time, said trader's size of the portfolio, or the absolute or relative (to other traders) market value of all of the contracts he owns, or other factors.

The trader can access the exchange system through various user terminal apparatuses. For example, user terminals can comprise, include or be embodied in portable or non-portable processing apparatuses such as one or more of a laptop computer, desktop computer, server computer, a mobile telephone, a portable digital assistant (PDA), a television and the like, such as terminals 6 shown in FIG. 1. These access systems may be configured to communicate information with the exchange or trading platform system 5 across wired and/or wireless networks such as the internet.

A sale may be deemed complete when a trader clicks on the "buy" button or completes a similar action through the user trading terminal 6, the order is routed to the exchange system 5, filled in full, in part, or remains unfilled pending availability at that particular price/quantity pair, and if an order is fully or partially filled, the funds are debited from the trader's account and preferably a confirmation is provided to the trader noting the price and quantity sold. The said funds may be recorded on the exchange operator's general ledger as revenue, credited to the contract reserve pool module 26, which stores information pertaining to pools that may accumulate cash based on trading activity, routed to revenue sharing and reporting module 14, or may be deployed for another purpose.

In an embodiment, each contract created or developed by the exchange or by the users may have a unique serial number that identifies the type of the contract and may be stored on a serialized contract data server 22. A contract administration module 24 may be configured to handle all processes related to contract administration and serialization. Furthermore, the open market data server 8, which may be configured to communicate with the exchange system 5, may also be configured to store information including the financial instruments traded by the exchange, the buy and sell orders entered by users, and the serial number for each contract.

When a plurality of traders complete the buying process described above for a plurality of teams within a certain time period, the initial offering process may be deemed complete. Contracts that are not sold may remain available to future buyers, or alternatively, they may be retired. Contracts that are sold are preferably recorded on trader portfolios, where such contracts may now be generally available for secondary market trading, i.e. for buying and selling between traders.

In some embodiments, the contract may be in the form of stocks, options, future contracts, or other financial products, where the contracts may not be subject to the floating process described above and may instead be made available through mechanisms well known in the art.

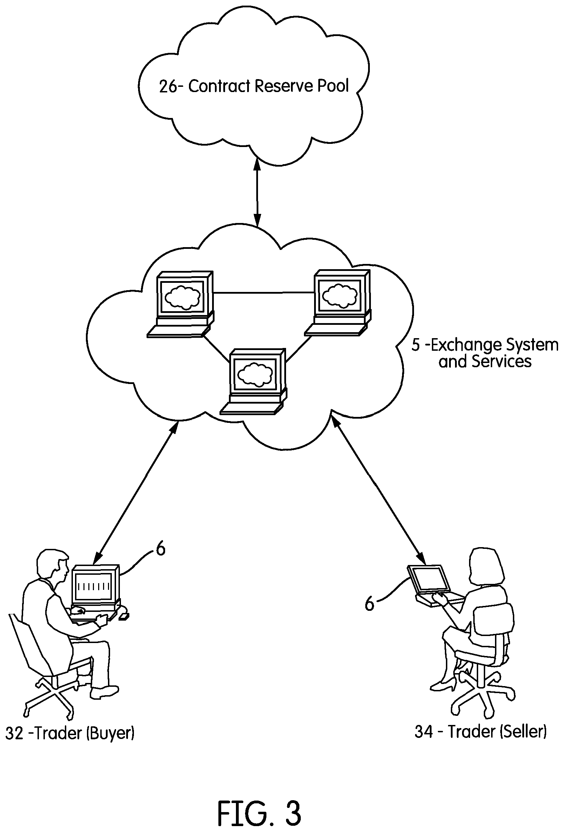

FIG. 3 shows a diagrammatical view of a system configured to enable trading sports-based financial instruments on an exchange system or platform in accordance an exemplary embodiment. In particular, FIG. 3 shows a system wherein the sports based instruments can be traded between the traders, i.e. between the buyer 32 and the seller 34. In a preferred embodiment, the buyer 32 and seller 34 may provide liquidity by posting orders that will be stored on the exchange database 5 and contract reserve pool module 26. The information may be displayed to the traders, in whole or in part, that they can access through their user trading terminals 6. In some embodiments, the level of access may be different depending on user access privileges. In some embodiments, market makers, internal or external, may be employed with the objective of providing liquidity to facilitate trading.

Traders can also take liquidity by taking the opposite side of an existing order that they can access through their user trading terminals 6. Once an order crosses, or an existing order that was posted by a trader is filled by another trader, the buyer's portfolio is credited with the contracts bought and his account debited the corresponding value at which the transaction was completed, which generally may be the amount of contracts multiplied by the contract price (calculated and summed up accordingly if a plurality of orders are filled at multiple price/quantity pairs) whereas the seller's portfolio would is debited with the said contracts and her account is credited with the said transaction value.

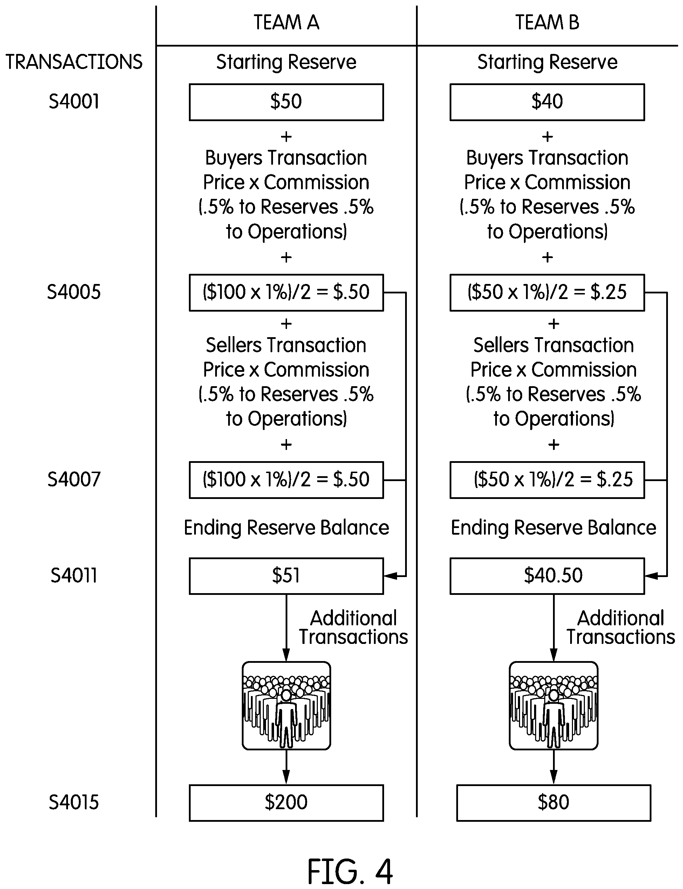

In an embodiment, the traders may also have the option of short selling, wherein a seller sells a contract without owning it outright. Said short selling may be performed by the short seller borrowing a contract from another trader, the exchange operator, market makers or other similar parties that may have contracts available to lend and then transacting with the buyer under the regular trading principles. In some embodiments, fees may apply on borrowed contracts. In an embodiment where short selling is enabled, preferably, short sellers are responsible for paying dividends where applicable. FIG. 4 shows methods for funding contract reserve pools using a contract reserve pool module in accordance with an exemplary embodiment. In particular, FIG. 4 shows a process of cash accumulation using contract reserve pool module 26 in accordance with preferred embodiments. The contract reserve pool module 26 may be included in or connected to the open market data server 8 or the exchange server 5. The contract reserve pool module 26 may comprise a processor and/or memory or storage components for storing, processing, and/or serving contract reserve pool data.

A commission may apply to executed trades where the commission amount may be determined by multiplying the transaction price by a predetermined percentage. In a preferred embodiment, a progressive commission scheme may be used where the traders, either at the time of the trade or through post-trade reconciliations at regular intervals, monthly, quarterly and the like, pay progressively lower commissions, perhaps none, in percentage terms as they trade higher volumes. In some embodiments, predetermined commission may be different for the buyer and the seller or over time. In other embodiments, fixed commissions may apply wherein the commission collected on each trade may be a fixed, predetermined amount that does not depend on the number of contracts traded.

In a preferred embodiment, the commissions collected are split between the exchange operator in the form of revenue recorded, and contract reserve pools. Specifically, with each trade, the portion of the commissions that contribute to the contract reserve pools accumulate where the data may be stored on the exchange system 5 or open market data server 8 and preferably displayed to the users trading terminal 6.

FIG. 4 shows methods implemented by the exchange system 5 and/or the open market data server 8 with the contract reserves pool module 26, which may be configured to process and/or store contract reserve pool data. The pool data stored on exchange system 5 and/or open market data server 8 may contain the starting reserve for a plurality of teams at S4001, applying a first transaction commission amount at S4005 by multiplying the buyer's transaction price by a predetermined percentage. Methods may include applying a second transaction commission amount at S4007, and combining the applied commission to yield an ending reserve balance at S4011. Additional transaction commissions, which may be from other buyers and/or sellers may be applied, and further totals obtained at, for example, S4015.

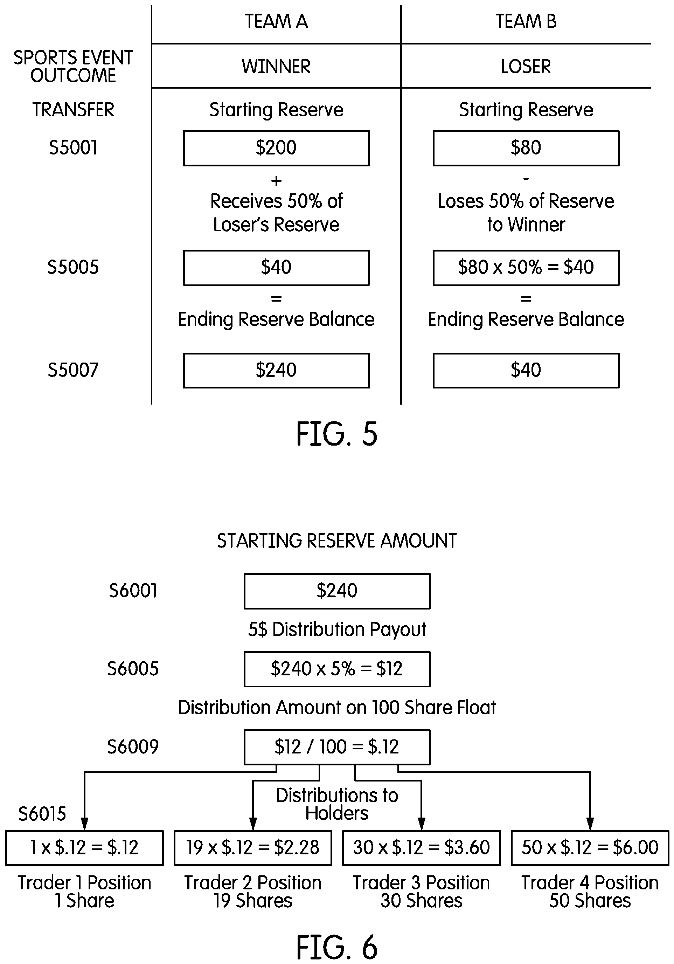

FIG. 5 shows methods for redistributing contract reserve pools based on sports event outcomes in accordance with an exemplary embodiment. In particular, FIG. 5 shows redistribution of contract reserve pools in accordance with preferred embodiments. When a sporting event, a game between two teams, a race between athletes, cars, bikes, and the like or other similar sports events are completed, the open market data server preferably communicates to the data server in the public domain 7, where the data server could belong to an official league website, a third-party sports content provider, e.g. ESPN or the like. The exchange system 5 or any of its components may be configured to received, process, and scrape the sports event outcome or other relevant data. Said data may be subject to additional verification by an internal employee of the exchange operator or a third-party verification agent. Subsequently, a predetermined percentage may be multiplied with the contract reserves pool of the losing team, or a plurality of competitors in the case of a race, at the time of the settlement provided at S5001 for each of Teams A and B, and the resulting amount may be transferred to the winning team, athlete, or the like at S5005 to yield an ending reserve balance of S5007 for Teams A and B. In the case of more than two teams or competitors are involved, different percentages may apply to different losing parties depending on their placement in the competition, race or the like. Said transfer may be deemed complete when the contract reserve pools are updated, the updated information is stored on the exchange system 5 or on the open market data server 8 and preferably displayed to the users at their user trading terminal 6.

FIG. 6 shows methods for distributing a portion of contract reserve pools to the contract holders in accordance with an exemplary embodiment. In particular, FIG. 6 shows a process of partial or full distribution of contract reserve pools to contract holders in accordance with an embodiment.

As shown in FIG. 6, upon the redistribution of contract reserve pools upon the completion of sporting event, said reserves can be provided at S6001 may be distributed to the contract holders in part in a distribution determined using predetermined percentages at S6005. The distribution may be calculated by multiplying the said percentage with the amount in the reserve pool provided at S6001. In an embodiment, the distribution may be determined by multiplying the said percentage with the amount in the reserve pool at S6005 and subsequently debiting the reserve pool and crediting the traders accounts based on the number of contracts they hold at the time of the distribution at S6009. For example, if the total distributed amount is $12, and the float is 100 contracts, a trader that owns one contract may be credited with $0.12 (=$12/100) at S6015, and a trader that owns nineteen contracts may be credited with $2.28 (=($12/100)*19) at S6015. Preferably, the updated information is then displayed to the users at their user trading terminal 6.

In an embodiment wherein short selling is enabled, the short seller may be responsible for funding the dividend distribution to the contract holder commensurate with the number of contracts they shorted.

In an embodiment, distributions may take place irrespective of game outcomes. Such distributions may happen at predetermined regular intervals, e.g. monthly, quarterly, and the like, or alternatively, or in addition to regular intervals, in a one-time fashion. Embodiments within the scope of the present disclosure may also include computer-readable media for carrying or having computer-executable instructions or data structures stored thereon. Such computer-readable media can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium which can be used to carry or store desired program code means in the form of computer-executable instructions or data structures. When information is transferred or provided over a network or another communications connection (either hardwired, wireless, or combination thereof) to a computer, the computer properly views the connection as a computer-readable medium. Thus, any such connection is properly termed a computer-readable medium. Combinations of the above should also be included within the scope of the computer-readable media.

Computer-executable instructions include, for example, instructions and data which cause a general purpose computer, special purpose computer, or special purpose processing device to perform a certain function or group of functions. Computer-executable instructions also include program modules that are executed by computers in stand-alone or network environments. Generally, program modules include routines, programs, objects, components, and data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps. Although the above description may contain specific details, they should not be construed as limiting the claims in any way. Other configurations of the described embodiments of the disclosure are part of the scope of this disclosure. For example, the principles of the disclosure may be applied to each individual user where each user may individually deploy such a system. This enables each user to utilize the benefits of the disclosure even if any one of the large number of possible applications do not need the functionality described herein. Accordingly, the appended claims and their legal equivalents should only define the disclosure, rather than any specific examples given.

## Claims

1. A computer-implemented system for trading sports-based financial instruments, **characterized by**:
an exchange platform (5), the exchange platform (5) being connected to a sports industry information database on an open market data server (8), the exchange platform (5) being configured to derive information performance or non-performance based algorithms, indexes, methods and specifications (20), wherein combinations thereof are useable for developing or trading a sports-based financial contract that facilitates price discovery in the sports industry,
a contract-administration module (24) configured to automatically associate a unique serial number with the said contract and to record the association in the said sports industry information database on the open market data server (8);
first tracking devices for tracking the said contract through a life of the contract;
a speed-limiting module (9) configured to automatically flag or reject a high-speed trade by a non-human system user (12); and
a second tracking device (4), connected to a rewards server (2), configured to automatically track measures of financial knowledge, the rewards server (2) being configured to store trading data and said measures of financial knowledge so as to enable traders to accumulate reward points based on trading activity or said measures of financial knowledge.

2. The system of claim 1, comprising:
an electronic wallet module (3), the wallet module (3) being connected to a banking network (1) and being configured for communicating with the exchange server (5), the wallet module (3) being disposed on the exchange server (5) or on remote computing device.

3. The system of claim 1, comprising:
a rewards server (2), the rewards server (2) being connected to the exchange platform (5) and being configured to store trading or financial knowledge data and execute a reward process.

4. The system of claim 1, comprising:
a contract reserve pool module (26), the contract reserve pool module (26) being configured to process or store contract reserve pool data.

5. The system of claim 1, comprising:
a revenue sharing module (14), the module (14) being configured to share revenues with a plurality of sports league, organization, similar governing bodies or athletes.

6. The system of claim 1, wherein the exchange platform is configured to communicate with a mobile device (3) configured to run a mobile application.

7. A method of using a system according to one of claims 1 to 6 for trading sports-based financial instruments, comprising:
providing a contract to a prospective trader (32, 34) for an initial offer at a first price/quantity pair on the exchange platform (5);
receiving, at the exchange platform (5), an input from a trader (32) to buy the contract;
receiving, at the exchange platform (5), an input from a trader (34) to sell the contract;
using the contract administration module (24) to automatically associate a unique serial number with the contract and to record the association in the sports industry information database on the open market data server (8);
using first tracking devices for tracking the said contract through a life of the contract;
using the speed-limiting module (9) to automatically flag or reject a high-speed trade from a non-human user (12);
using a second tracking device (4), connected to a rewards server (2), to automatically track measures of financial knowledge, the rewards server (2) being storing trading data and said measures of financial knowledge; and
accumulating reward points based on trading activity or said measures of financial knowledge.
determining and recording an amount of accumulating cash in a contract reserve pool using the contract reserve pool module (24), the pool module (24) being configured to process or store contract reserve pool data, the contract reserve pool being funded by a trading commission;
redistributing contract reserve pools based on sports event outcomes using the contract reserve pool module (24); and
determining distributions to contract holders from the contract reserve pools using the contract reserve pool module (24).

8. The method of claim 7, comprising:
receiving from a first trader (32, 34) an offer to buy a plurality of contracts;
receiving from a second trader (32, 34) an offer to buy from the first trader the plurality of contracts being purchased by the first trader (32, 34).

9. The method of claim 7, wherein the sports activity comprises at least one activity selected from the following group of activities consisting essentially of: track and field, tennis, swimming, soccer, football, baseball, cricket, hockey, basketball, track, golf, boxing, martial arts, lacrosse, car racing, or motorized racing.

10. The method of claim 8, comprising:
displaying the offer on a mobile device (3) of the prospective trader (32, 34).

11. The method of claim 8, comprising:
displaying the offer on a mobile device (3) of the seller (34).
